# EUROPÄISCHE PATENTANMELDUNG

(11) **EP 4 691 325 A1**
(43) Veröffentlichungstag der Anmeldung: **11.02.2026**
(21) Anmeldenummer: 25190458.7
(22) Anmeldetag: 18.07.2025
(51) Int. Cl.: A47J 31/52

(54) **VERFAHREN ZUM BETREIBEN EINES KAFFEEAUTOMATEN**

(30) Priorität: 09.08.2024 DE 102024207637
(71) Anmelder: BSH Hausgeräte GmbH, 81739 München (DE)
(72) Erfinder: Gerl, Bernhard, 83278 Traunstein (DE); Garschhammer, Florian, 83349 Palling (DE); Schaufler, Stephan, 83334 Inzell (DE)

(57) **Zusammenfassung**

Die vorliegende Erfindung betrifft ein Verfahren zum Betreiben eines Kaffeeautomaten (1), welcher bei Nichtnutzung in einen Stand-by-Modus wechselt und bei dem der Kaffeeautomat (1) durch Drücken einer Getränkeauswahltaste (3) und/oder durch Empfangen eines entsprechenden Signals (4) direkt aus dem Stand-by-Modus in einen Betriebs-Modus überführt wird und direkt das mittels der Getränkeauswahltaste (3) oder mittels des empfangenen Signals (4) ausgewählte Getränk ausgibt.

## Beschreibung

Die vorliegende Erfindung betrifft ein Verfahren zum Betreiben eines Kaffeeautomaten. Die Erfindung betrifft ferner ein zum Ausführen dieses Verfahrens ausgestaltetes Computerprogrammprodukt sowie einen Kaffeeautomaten, der zur Durchführung dieses Verfahrens eingerichtet bzw. programmiert ist.

Kaffeeautomaten ermöglichen es einem Nutzer verschiedene Kaffee- und Kaffee-Milchgetränke auf Knopfdruck zuzubereiten. Dazu werden die Kaffeeautomaten typischerweise zuerst aus dem Stand-by-Modus eingeschaltet. Das Einschalten wird vom Nutzer meist durch eine spezielle Taste (On/Off oder Stand-by-Taste) bewirkt. Anschließend fährt die Geräteelektronik den Kaffeeautomaten hoch. Dabei werden verschiedene Prozessschritte, wie beispielsweise ein Vorheizen des Kaffeeautomaten, ein Spülen eines Kaffeeauslaufs und innerer Leitungen sowie eine Initialisierung von Komponenten durchlaufen. Dieser Hochfahrprozess kann je nach Kaffeeautomat unterschiedlich lange dauern, in der Regel ca. 10 sek. bis 2 min. Danach ist der Kaffeeautomat im Betriebs-Modus und der Nutzer kann auf dem Bedienfeld (Display oder Tasten) ein Getränk auswählen und die Zubereitung starten.

Nachteilig bei den aus dem Stand der Technik bekannten Kaffeeautomaten ist jedoch der Umstand, dass ein Nutzer zum Bezug eines ausgewählten Getränks an einem sich im Stand-by-Modus befindlichen Kaffeeautomaten diesen zunächst aus dem Stand-by-Modus wecken und anschließend erneut ein Getränk auswählen muss, beispielsweise durch Drücken einer entsprechenden Getränkeauswahltaste an einem Display. Der Nutzer muss dabei entweder neben dem Kaffeeautomaten bis zu 2 min. warten oder nach einer vordefinierten Zeit, in welcher der Getränkeautomat hochgefahren wird, nochmals vorbeikommen. Der Nutzer kann insbesondere auch nicht sofort beim Hochfahren des Getränkeautomaten aus dem Stand-by-Modus in einen Betriebszustand einen Getränkebehälter unter einen Kaffeeauslauf stellen, da bislang bekannte Kaffeeautomaten beim Hochfahren zunächst ein Spülen des Kaffeeauslaufs durchführen und der Nutzer dieses Spülwassers selbstverständlich nicht als Verunreinigung in seinem später ausgegebenen Kaffeegetränk wiederfinden möchte.

Die vorliegende Erfindung beschäftigt daher mit dem Problem, ein Verfahren zum Betrieb eines Kaffeeautomaten anzugeben, mittels welchem insbesondere die aus dem Stand der Technik bekannten Nachteile überwunden werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Verfahren anzugeben, bei welchem ein bislang erforderliches zweimaliges Bedienen eines Kaffeeautomaten zum Wecken desselben aus einem Stand-by-Modus und zum anschließenden Auswählen eines Getränks nun erfindungsgemäß durch eine Art "Kurzwahltaste" mit einem einzigen Betätigen abgekürzt werden kann. Bei dem erfindungsmäßen Verfahren zum Betreiben eines Kaffeeautomaten, der bei Nichtnutzung in einen Stand-by-Modus, insbesondere einen Stromsparmodus, wechselt, wird dieser Kaffeeautomat durch Drücken einer Getränkeauswahltaste oder durch Empfangen eines entsprechenden Signals aus dem Stand-by-Modus in einen Betriebs-Modus überführt und gibt nach einem Aufwärmen/Hochfahren direkt das über die zuvor mittels der Getränkeauswahltaste oder mittels des empfangenen Signals ausgewählte Getränk aus. Hierdurch ist es möglich, einen für einen Nutzer deutlich komfortableren Bezug von Kaffeegetränken zu realisieren, da der Nutzer bei dem erfindungsgemäßen Verfahren nicht entweder neben dem Kaffeeautomaten stehen bleiben muss, um diesen zweimal zu bedienen, oder für die zweimalige Bedienung zu einem späteren Zeitpunkt zurückkommen muss. Durch Drücken der zumindest einen Getränkeauswahltaste oder Empfangen eines entsprechenden Signals startet somit die Elektronik einen Hochfahrprozess sowie im Anschluss daran direkt die Getränkezubereitung.

Bei einer vorteilhaften Weiterbildung des erfindungsmäßen Verfahrens erfolgt nach dem Drücken der Getränkeauswahltaste oder dem Empfangen eines entsprechenden Signals und vor der Ausgabe des ausgewählten Getränks kein Spülen, beispielsweise eines Kaffeeauslaufs. Hierdurch ist es möglich, dass ein Nutzer zusammen mit dem Drücken der Getränkeauswahltaste einen entsprechenden Getränkebehälter unter dem Kaffeeauslauf positionieren kann, ohne dass er befürchten muss, dass in diesen zunächst Spülwasser eingeleitet wird, welches das anschließend über den Kaffeeauslauf ausgegebene Kaffeegetränk verunreinigt. Durch den Verfahrensschritt, bei welchem ein etwaiges Spülen des Getränkeauslaufs bzw. innerer Leitungen beim Hochfahren unterdrückt wird, kann somit eine deutliche Komfortsteigerung für einen Nutzer erreicht werden, da dieser nach dem Drücken der Getränkeauswahltaste oder dem Empfangen eines entsprechenden Signals sofort seinen Getränkebehälter unter den Kaffeeauslauf stellen kann. Zudem bekommt der Nutzer sein gewünschtes und ausgewähltes Kaffeegetränk auch viel schneller, da das Spülen, insbesondere des Kaffeeauslaufs sowie der inneren Leitungen entfällt.

Bei einer besonders bevorzugten Ausführungsform des erfindungsgemäßen Verfahrens muss die Getränkeauswahltaste eine vordefinierte Zeit, beispielsweise zumindest 1 Sekunde, vom Nutzer gedrückt werden, um eine Ausgabe des gewählten Getränks einzuleiten. Durch den Umstand, dass ein Nutzer sowohl zum Hochfahren des Kaffeeautomaten als auch zum Getränkebezug die für das ausgewählte Kaffeegetränk zugehörige Getränkeauswahltaste beispielsweise mindestens 1 Sekunde lang drücken muss, wird verhindert, dass der Nutzer einen Getränkeausgabeprozess, beispielsweise beim Reinigen des Kaffeeautomaten, versehentlich in Gang setzt.

Bei einer weiteren vorteilhaften Ausführungsform des erfindungsgemäßen Verfahrens wird vor der Ausgabe des ausgewählten Getränks ein optisches und/oder akustisches Signal ausgegeben. Dies kann beispielsweise über eine entsprechende LED oder einen Lautsprecher erfolgen, wodurch der Nutzer unmittelbar darauf hingewiesen wird, dass der Kaffeeautomat seinen Betriebs-Modus erreicht hat und nun die Ausgabe des über die Getränkeauswahltaste ausgewählten Getränks beginnt. "Vor der Getränkeausgabe" soll in diesem Fall auch ein Ausgeben eines entsprechenden Signals beim Drücken der Getränkeauswahltaste oder beim Empfangen eines entsprechenden Signals beinhalten, sodass das optische und/oder akustische Signal beim Drücken der Getränkeauswahltaste oder beim Empfangen eines entsprechenden Signals ausgegeben wird. Damit hat der Nutzer einen Hinweis, dass der Kaffeeautomat das Signal empfangen hat und nun der gesamte Prozess (Hochfahren + Kaffeezubereitung) startet. Zusätzlich oder alternativ kann vorgesehen sein, dass nach der Ausgabe des ausgewählten Getränks mittels des Signalgebers ein weiteres optisches und/oder akustisches Signal ausgegeben wird. Durch das weitere Signal kann der Nutzer daran zu erinnert werden, zum Kaffeeautomaten zurückzukehren.

Bei einer besonders bevorzugten Ausführungsform wird das entsprechende Signal über ein Mobiltelefon an den Kaffeeautomaten übermittelt. Hierzu weist der Kaffeeautomat eine Signalempfangseinrichtung, beispielsweise ein WLAN-Modul, auf, über welches er in ein WLAN-Netz eingebunden ist und über welches er Signale, beispielsweise zum Starten des erfindungsgemäßen Verfahrens, empfangen kann. Dies bietet den großen Vorteil, dass ein Nutzer beispielsweise zunächst einen Getränkebehälter unter dem Kaffeeauslauf positionieren und zu einem beliebigen späteren Zeitpunkt über sein Mobiltelefon das erfindungsgemäße Verfahren starten und dadurch das ausgewählte Getränk erhalten kann. Hierdurch ergibt sich eine erhebliche Zeitersparnis, da der Nutzer beispielsweise bereits wenige Minuten zuvor mittels eines Mobiltelefons oder eines anderen WLAN-fähigen Geräts das Verfahren starten kann und bei der Ankunft an dem Kaffeeautomaten bereits ein wunschgemäß zubereitetes Getränk vorfindet und direkt mitnehmen kann.

Bei einer besonders vorteilhaften Ausführungsform des erfindungsmäßen Verfahrens wird das ausgewählte Getränk mit den zuletzt hierfür eingestellten Getränkeparametern ausgegeben. Dies bietet den Vorteil, dass ein Nutzer spezifische Getränkeparameter, wie beispielsweise eine Kaffeemenge, eine Milchmenge, eine Wassermenge und/oder einen Brühdruck, individuell nach seinem Geschmack einstellen kann und dadurch ein für ihn äußerst schmackhaftes Kaffeegetränk erhält. Die gewünschten Getränkeparameter können dabei zuvor in dem Kaffeeautomaten abgespeichert werden, insbesondere auch individuell für unterschiedliche Nutzer.

Die vorliegende Erfindung beruht weiter auf dem allgemeinen Gedanken, einen Kaffeeautomaten mit einer Rechnereinrichtung und zumindest einer damit kommunizierend verbundenen Getränkeauswahltaste und/oder einer Signalempfangseinrichtung anzugeben, wobei die Rechnereinrichtung zur Durchführung des in den vorherigen Absätzen beschriebenen Verfahrens ausgebildet ist. Mittels eines derartigen Kaffeeautomaten lässt sich das zuvor beschriebene erfindungsgemäße Verfahren ausführen und damit die bezüglich des erfindungsgemäßen Verfahrens beschriebenen Vorteile auf den Kaffeeautomaten übertragen. Konkret handelt es sich bei diesen Vorteilen um eine erhebliche Komfortsteigerung für einen Nutzer, da dieser den Kaffeeautomaten durch eine einmalige Betätigung, entweder durch Drücken der Getränkeauswahltaste oder durch Senden eines entsprechenden und das erfindungsgemäße Verfahren startenden Signals nicht nur aus dem Stand-by-Modus wecken, sondern zugleich auch die Getränkezubereitung starten kann. Eine wie bislang übliche zweimalige Interaktion mit dem Kaffeeautomaten entfällt somit.

Bei einer vorteilhaften Weiterbildung des erfindungsgemäßen Kaffeeautomaten ist die zumindest eine Getränkeauswahltaste als mechanische Taste ausgebildet oder als bildliche Darstellung auf einem Display. Besonders die bildliche Darstellung auf einem Display ermöglicht es Nutzern, unabhängig von deren technischen und/oder sprachlichen Kenntnissen allein aufgrund der bildlichen Darstellung das gewünschte Kaffeegetränk auszuwählen und durch entsprechend langes Drücken der Getränkeauswahltaste den Zubereitungsvorgang zu starten.

Die Erfindung betrifft ferner ein Computerprogrammprodukt, welches durch ein Computersystem auslesbare Anweisungen enthält, derart, dass das Computersystem, d. h. beispielsweise eine Rechnereinrichtung, beim Ausführen des Computerprogrammprodukts das vorstehend vorgestellte, erfindungsmäße Verfahren ausführt. Ein derartiges Computerprogrammprodukt umfasst somit Befehle, welche bei Ausführung des Computerprogrammprodukts durch den Kaffeeautomaten diesen veranlassen, das erfindungsgemäße Verfahren auszuführen. Das Computerprogrammprodukt ist vorteilhaft auf einem Speicher in dem Kaffeeautomaten hinterlegt, kann jedoch aber auch in einer Cloud hinterlegt sein, auf welche der Kaffeeautomat zugreifen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Figur 1: einzelne Verfahrensschritte eines erfindungsgemäßen Verfahrens zum Betreiben eines Kaffeeautomaten,
- Figur 2: einen erfindungsgemäßen Kaffeeautomaten.

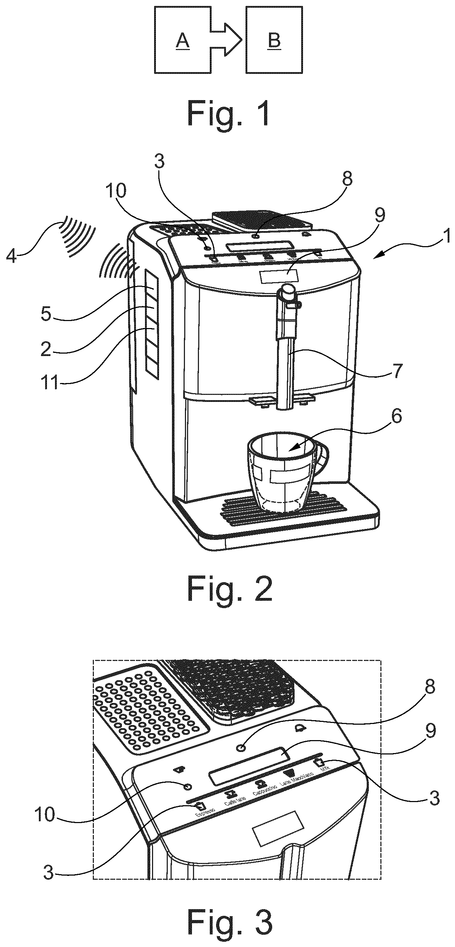

Entsprechen der Figur 1 weist ein erfindungsmäßen Verfahren zum Betreiben eines erfindungsgemäßen Kaffeeautomaten 1 (vergleiche Figur 2) zwei Verfahrensschritte A und B auf, wobei sich im Verfahrensschritt A der erfindungsmäße Kaffeeautomaten 1 wegen Nichtnutzung noch in einem Stand-by-Modus befindet. Im Verfahrensschritt A drückt ein Nutzer eine Getränkeauswahltaste 3, wobei alternativ im Verfahrensschritt A das Drücken der Getränkeauswahltaste 3 durch einen Nutzer auch durch Empfangen eines entsprechenden Signals 4 mittels einer Signalempfangseinrichtung 5, bereichsweise einem WLAN-Modul, erfolgen kann. Sowohl durch das Drücken der Getränkeauswahltaste 3 durch den Nutzer als auch durch das Empfangen eines entsprechenden (Start-)signals 4 mittels der Signalempfangseinrichtung 5 wird der Kaffeeautomat 1 von seinem Stand-by-Modus in einen Betriebs-Modus überführt und gibt nach einem Aufwärmen bzw. Hochfahren direkt das zuvor ausgewählte Getränk aus. Dies bietet den großen Vorteil, dass der Nutzer nicht wie bislang zunächst mittels einer ersten Betätigung den Kaffeeautomaten 1 von einem Stand-by-Modus in einen Betriebs-Modus überführen muss und nach Abwarten einer vordefinierten Zeit, beispielsweise mehrere Sekunden bis mehrere Minuten, den Getränkewunsch, beispielsweise über eine Getränkeauswahltaste 3, eingeben muss. Der Nutzer kann somit nicht nur sein ausgewähltes und gewünschtes Getränk deutlich schneller empfangen, sondern er kann auch bereits zu Beginn des erfindungsgemäßen Verfahrens einen Getränkebehälter 6 unter einem Kaffeeauslauf 7 platzieren.

Letzteres kann entsprechend einem besonders bevorzugten Verfahrensschritt dadurch unterstützt werden, dass nach dem Drücken der Getränkeauswahltaste 3 durch den Nutzer bzw. nach dem Empfangen des Signals 4 mittels der Signalempfangseinrichtung 5 kein Spülen des Kaffeeauslaufs 7 und/oder innerer Leitungen erfolgt, was zu einer Verunreinigung eines später in den Getränkebehälter 6 eingefüllten Getränks führen würde. Durch das Entfallen des Spülens des Kaffeeauslaufs 7 bzw. innerer Leitungen kann der Ausgabevorgang deutlich beschleunigt werden.

Betrachtet man die Figur 2 weiter, so kann man erkennen, dass der Kaffeeautomat 1 eine Stand-by-Taste 8 aufweist, über welche der Kaffeeautomat 1 prinzipiell ebenfalls aus seinem Stand-by-Modus in einen Betriebs-Modus überführt werden kann. Mittels der Stand-by-Taste 8 kann der Kaffeeautomat 1 zudem bei einer längeren Betätigung der Stand-by-Taste 8 ausgeschaltet werden. Auch ein Überführen des Kaffeeautomaten 1 vom Betriebs-Modus in den Stand-by-Modus kann durch das Drücken der Stand-by-Taste 8 bewirkt werden.

Die Getränkeauswahltaste 3 kann dabei als Taste, insbesondere als mechanische Taste oder als Touch-Taste ausgebildet sein oder eine bildliche Darstellung in einem Display 9 bilden, wobei insbesondere die bildliche Darstellung den großen Vorteil bietet, dass diese für einen Nutzer intuitiv bedienbar ist. Auch die mechanische Taste bzw. die Touch-Taste kann dabei mit einem Symbol hinterlegt, bzw. hinterleuchtet sein.

Vor dem Ausgeben des ausgewählten Getränks kann der erfindungsgemäße Kaffeeautomat 1 auch ein Signal ausgeben, welches beispielsweise mittels eines akustischen und/oder optischen Signalgebers 10. Dieser ist gemäß der Figur 2 oben am Kaffeeautomaten 1 angeordnet, wobei dieser akustische und/oder optische Signalgeber 10 selbstverständlich auch an beliebiger anderer Stelle angeordnet sein kann oder lediglich über das Display 9 dargestellt werden kann. "Vor der Getränkeausgabe" soll in diesem Fall auch ein Ausgeben eines entsprechenden Signals beim Drücken der Getränkeauswahltaste 3 oder beim Empfangen eines entsprechenden Signals 4 beinhalten, sodass das optische und/oder akustische Signal beim Drücken der Getränkeauswahltaste 3 oder beim Empfangen eines entsprechenden Signals 4 ausgegeben wird. Zusätzlich oder alternativ kann somit vorgesehen sein, dass nach der Ausgabe des ausgewählten Getränks mittels des Signalgebers 10 ein weiteres optisches und/oder akustisches Signal ausgegeben wird. Durch das weitere akustische und/oder optische Signal kann der Nutzer daran zu erinnert werden, zum Kaffeeautomaten 1 zurückzukehren.

Bei einer besonders bevorzugten Ausführungsform des erfindungsgemäßen Verfahrens wird das ausgewählte Getränk mit den zuletzt hierfür eingestellten Getränkeparametern ausgegeben. Dies ermöglicht es dem Nutzer einzelne Getränkeparameter, wie beispielsweise einen Brühdruck, eine Kaffeemenge, eine Brühzeit und/oder eine Brühtemperatur bzw. eine Wassermenge vorab festzulegen und dadurch ein für ihn besonders schmackhaftes Getränk zu kreieren. Dies kann in dem Kaffeeautomaten 1 beispielsweise in einem Speicher 11 einer Rechnereinrichtung 2 hinterlegt werden.

In dem Speicher 11 der Rechnereinrichtung 2 kann auch ein Computerprogrammprodukt hinterlegt sein, welches durch ein Computersystem bzw. die Rechnereinrichtung 2 auslesbare Anweisungen erhält, derart, dass das Computersystem bzw. die Rechnereinrichtung 2 beim Ausführen des Computerprogrammprodukts das in den vorherigen Absätzen beschriebene erfindungsgemäße Verfahren ausführt.

Mit dem erfindungsmäßen Verfahren und dem erfindungsgemäßen Kaffeeautomaten 1 ist es somit möglich, einen Bestellvorgang für ein bestimmtes und gewünschtes Getränk bei einem sich im Stand-by-Modus befindlichen Kaffeeautomaten 1 deutlich zu beschleunigen, da hierfür die Getränkeauswahltaste 3 lediglich ein einziges Mal betätigt werden muss, bzw. lediglich ein einziges Mal ein entsprechendes Signal 4 von der Signalempfangseinrichtung 5 des Getränkeautomaten 1 empfangen werden muss. Das Aussenden eines derartigen Signals kann von jedem Mobiltelefon und/oder Tablet erfolgen, wobei die Signalempfangseinrichtung 5 des Kaffeeautomaten 1 beispielsweise als WLAN-Modul ausgebildet sein kann oder alternativ als SIM-Karte.

Mit dem erfindungsmäßen Verfahren und dem erfindungsgemäßen Kaffeeautomaten 1 kann auch ein Abstellen eines Getränkebehälters 6 unter dem Kaffeeauslauf 7 sowie ein Auswählen eines gewünschten Kaffeegetränks zu einem beliebigen späteren Zeitpunkt ermöglicht werden, insbesondere durch Senden und Empfangen eines entsprechenden Signals 4, wobei durch das erfindungsgemäße Verfahren der spätere Getränkebezug deutlich schneller ermöglicht wird.

### Bezugszeichenliste

- 1: Kaffeeautomat
- 2: Nutzer
- 3: Getränkeauswahltaste
- 4: Signal
- 5: Signalempfangseinrichtung
- 6: Getränkebehälter
- 7: Kaffeeauslauf
- 8: Stand-by-Taste
- 9: Display
- 10: Signalgeber
- 11: Speicher
- 12: Rechnereinrichtung

## Patentansprüche

1. Verfahren zum Betreiben eines Kaffeeautomaten (1), welcher bei Nichtnutzung in einen Stand-by-Modus wechselt und bei dem der Kaffeeautomat (1) durch Drücken einer Getränkeauswahltaste (3) und/oder durch Empfangen eines entsprechenden Signals (4) direkt aus dem Stand-by-Modus in einen Betriebs-Modus überführt wird und das mittels der Getränkeauswahltaste (3) oder mittels des empfangenen Signals (4) ausgewählte Getränk ausgibt.

2. Verfahren nach Anspruch 1,
**dadurch gekennzeichnet,**
**dass** das entsprechende Signal (4) über ein Mobiltelefon an den Kaffeeautomaten (1) übermittelt wird.

3. Verfahren nach Anspruch 1 oder 2,
**dadurch gekennzeichnet,**
**dass** nach dem Drücken der Getränkeauswahltaste (3) oder nach dem Empfangen des entsprechenden Signals (4) und vor der Ausgabe des gewählten Getränks kein Spülen erfolgt.

4. Verfahren einem der Ansprüche 1 bis 3,
**dadurch gekennzeichnet,**
**dass** die Getränkeauswahltaste (3) eine vordefinierte Zeit, insbesondere zumindest eine Sekunde, gedrückt werden muss, um eine Ausgabe des gewählten Getränks einzuleiten.

5. Verfahren nach einem der vorhergehenden Ansprüche,
**dadurch gekennzeichnet,**
**dass** der Kaffeeautomat (1) durch Drücken einer Stand-by-Taste (8) in den Stand-by-Modus wechselt.

6. Verfahren nach einem der vorhergehenden Ansprüche,
**dadurch gekennzeichnet,**
- **dass** vor der Ausgabe des ausgewählten Getränks, insbesondere beim Drücken der Getränkeauswahltaste (3) oder beim Empfangen eines entsprechenden Signals (4), mittels eines Signalgebers (10) ein optisches und/oder akustisches Signal ausgegeben wird, und/oder
- **dass** nach der Ausgabe des ausgewählten Getränks mittels des Signalgebers (10) ein weiteres optisches und/oder akustisches Signal ausgegeben wird.

7. Verfahren nach einem der vorhergehenden Ansprüche,
**dadurch gekennzeichnet,**
**dass** das ausgewählte Getränk mit den zuletzt hierfür eingestellten Getränkeparametern ausgegeben wird.

8. Kaffeeautomat (1) mit zumindest einer Getränkeauswahltaste (3) und/oder einer Signalempfangseinrichtung (5) zum Empfangen von Signalen (4) sowie einer kommunizierend damit verbundenen Rechnereinrichtung (2) zur Durchführung des Verfahren nach einem der vorhergehenden Ansprüche.

9. Kaffeeautomat nach Anspruch 8,
**dadurch gekennzeichnet,**
**dass** die zumindest eine Getränkeauswahltaste (3) als Taste, insbesondere als mechanische Taste oder als Touch-Taste oder als bildliche Darstellung auf einem Display (9), ausgebildet ist.

10. Computerprogrammprodukt, welches durch ein Computersystem auslesbare Anweisungen enthält, derart, dass das Computersystem beim Ausführen des Computerprogrammprodukts das Verfahren nach einem der Ansprüche 1 bis 7 ausführt.
